# EUROPEAN PATENT SPECIFICATION

(11) **EP 3 802 167 B1**
(45) Date of publication and mention of the grant of the patent: **01.05.2024**
(21) Application number: 19807879.2
(22) Date of filing: 23.05.2019
(51) Int. Cl.: B60G 1/02, B60G 5/04, B60G 9/04, B62D 53/02

(54) **ARRANGEMENT IN AXLES OF A WORK MACHINE**
ANORDNUNG AN ACHSEN EINER ARBEITSMASCHINE
AGENCEMENT DANS DES ESSIEUX D'UNE MACHINE DE TRAVAIL

(30) Priority: 25.05.2018 FI 20185481
(43) Date of publication of application: 14.04.2021
(73) Proprietor: Karvanen, Jani, 47450 Perheniemi (FI)
(72) Inventor: Karvanen, Jani, 47450 Perheniemi (FI)
(74) Representative: Papula Oy
(86) International application number: PCT/FI2019/050401
(87) International publication number: WO 2019/224432

(56) References cited:
- WO-A1-2015/162341
- WO-A1-2015/162341
- GB-A- 2 424 630
- US-A1- 2010 206 648
- US-A1- 2011 181 011
- US-A1- 2011 181 011
- US-A1- 2016 303 936

## Description

### BACKGROUND OF THE INVENTION

The invention relates to a skid plate and a method for improving the durability of the set of axles of a work machine.

The invention further relates to an arrangement in a set of axles of a work machine. The object of the invention is described in greater detail in the preambles of the independent claims of the application.

In heavy work machinery chassis are used sets of axles, by means of which the wheels are supported on the work machine frame. Especially in work machines intended for off-road use and uneven terrain are typically used sets of axles provided with swing bogies. A set of swing bogie axles comprises a cross axle, both ends of which are provided with swing bogies, which in turn comprise wheels. The body of the cross axle is modular and comprised of several body parts attached to each other with screws. The set of axles is subjected to strong forces when the work machine is in use. Problems have been found in the durability of existing cross axles. Breakages of the body parts of axles cause interruptions in the productive use of the work machine and incur repair costs. Furthermore, the breaking of a body part may also cause other parts of the set of axles to break before the fault is detected. Documents US-2011/181011-A1, US-2010/206648-A1, and WO-2015/162341-A1 disclose some arrangements in axles of vehicles.

### BRIEF DESCRIPTION OF THE INVENTION

The idea of the invention is to provide a novel and improved arrangement and skid plate for the set of axles of a work machine and a method for improving the durability of the cross axle comprised in the set of axles.

The characteristic features of the arrangement according to the invention are disclosed in the characterising part of the independent device claim.

The characteristic features of the skid plate according to the invention are disclosed in the characterising part of another independent device claim.

The characteristic features of the method according to the invention are disclosed in the characterising part of the independent method claim.

The idea of the disclosed solution is that the set of axles of a work machine comprises a cross axle transverse to the frame of the work machine and swing bogies with wheels fixed to both ends of the cross axle. The body of the said cross axle comprises a centre body and two axle tubes removably attached on its opposite sides. The set of axles is attached to the frame of the work machine by means of attachment surfaces between the upper surface of the axle tubes and the lower surface of the frame of the work machine, and with vertical fastening screws. The centre body and the axle tubes comprised in the cross axle are furthermore attached to each other by screw joints. The body of the cross axle is thus modular. Between the said axle tubes is, in addition, fitted one or more tensioning devices which are arranged to pull the axle tubes towards each other and the centre body. In other words, the said tensioning device presses the parts of the modular body together and prevents the flange joints between the modules from breaking.

One advantage of the disclosed solution is that the tensioning device bears loads exerted on the body of the cross axle and thus increases its rigidity and durability. The tensioning device helps to prevent the formation of tears in the body modules, and particularly in the region of their attachment flanges. In this way, the lifetime of the cross axle can be increased, and breakages and the costs incurred by them as well as by unnecessary stoppages can be reduced. Furthermore, when the rigidity of the set of axles can be increased by means of tensioning devices, it is then even possible to increase the width of the wheels and the tracks fitted over them without compromising the durability of the cross axle.

A further advantage is that a more rigid cross axle body structure than before may also allow the work machine load to be increased. Thus, the capacity of the work machine can be increased without compromising its durability.

The idea of the disclosed skid plate is that the basic structure of the skid plate comprises a sheet-like metal section with an upper surface and a lower surface. The skid plate also comprises attachment means for attaching it below the cross axle of the work machine, and support means for supporting its upper surface against the lower surface of the cross axle. The skid plate further comprises two tensioning devices on its upper surface side, each with an elongated body and coupling loops at both ends of the said body. The distance between the coupling loops can be changed by means of a screw mechanism comprised in the tensioning device. By connecting the tensioning devices of the skid plate with the axle tubes comprised in the cross axle, they may be pulled towards each other, thereby generating a support force keeping the modular structure of the cross axle intact, the said force complementing the basic attachment between the modules.

According to one embodiment, the idea is that, with respect to the structure of the cross axle, the said tensioning device is an external and separate component which can be fixed in place and removed without disassembling the cross axle structure. The tensioning device can be attached to existing attachment points on the cross axle. No changes need to be made to the basic structure of the cross axle and its modules when the tensioning piece is an external element. A separate tensioning device of this type may, in addition, be attached to the cross axle afterwards without disassembling its structure.

According to one embodiment, the idea is that the mounting of the tensioning device does not require changes to the structure of the set of axles. The tensioning device can thus be mounted to any set of axles complying with the specification. Furthermore, the tensioning device may also be retrofitted into place in sets of axles already in use. Due to its flexible attachment possibilities, the disclosed tensioning device is easy and quick to mount and can also easily be replaced in case of possible breakage.

According to one embodiment, the idea is that the said tensioning device is fitted on the lower surface side of the cross axle, that is, on the opposite side with respect to the said attachment surfaces. The upper surface of the cross axle is thus supported on the frame beams of the work machine and the lower surface is supported by one or more tensioning devices.

According to one embodiment, the idea is that the arrangement comprises two tensioning devices fitted on either side of the cross axle's central axis. The tensioning force will then be exerted evenly on the cross axle without causing a bending load on the cross axle. Furthermore, with several tensioning devices, the tensioning force required can be generated more easily than with one device. On the other hand, when several tensioning devices are used, the size of a single tensioning device may be smaller than that of one large device, whereupon fitting the tensioning devices in connection with the cross axle is easier and means that the ground clearance underneath the cross axle does not need to be reduced.

According to one embodiment, the idea is that the tensioning devices are fitted substantially higher than the lowest point of the curved lower surface of the cross axle, whereupon the tensioning devices will not reduce the ground clearance of the work machine at the cross axle.

According to one embodiment, the idea is that the tensioning device is an elongated piece, both ends of which comprise coupling means for coupling with fastening screws between the axle tubes and the work machine frame, and means for moving the coupling means towards each other and away from each other in the longitudinal direction of the tensioning device.

According to one embodiment, the idea is that the tensioning device comprises an elongated body, both ends of which are provided with coupling loops, and the body comprises a screw mechanism for changing the distance between the coupling loops. Due to the coupling loops, the tensioning device is easy and quick to connect to the fastening screws of the cross axle. The screw mechanism is a simple and durable means for generating a strong force in proportion to its size.

According to one embodiment, the idea is that, instead of a screw mechanism, the tensioning device comprises some other mechanical actuator for generating the required force. The force means of the tensioning device may thus be based, for example, on the use of wedge means. Furthermore, in some cases, it may be possible to generate the required tensioning force by means of a hydraulic actuator, such as a hydraulic cylinder.

According to one embodiment, the idea is that between both coupling loops and the body of the tensioning device is at least one articulation which makes possible reciprocal rotation of a coupling loop and the body during the mounting of the tensioning device. Due to the articulating mechanism, mounting is quicker. The articulations also make it possible to attach the same tensioning device to different work machines even without making any changes.

According to one embodiment, the idea is that on the lower surface side of the cross axle is a skid plate which is a sheet-like piece. At least one tensioning device is fitted between the upper surface of the skid plate and the lower surface of the cross axle. In this case, the skid plate protects both the cross axle structure and the tensioning device.

According to one embodiment, the idea is that the skid plate is provided with two tensioning devices. The tensioning devices may be fitted on the upper surface side of the sheet-like main part of the skid plate, in which case they are protected by the skid plate. Furthermore, the tensioning devices may be fitted on both sides of the cross axle, whereupon the upper surface of the skid plate may be against the lower surface of the cross axle without the tensioning devices at all reducing the ground clearance between the skid plate and the ground.

According to one embodiment, the idea is that the skid plate comprises at least one access opening at the tensioning device, so that the screw mechanism of the tensioning device can be turned from the lower surface side of the skid plate and through the said access opening. The set of axles of a work machine intended for off-road use typically has a high ground clearance, which means that there is abundant space below the cross axle for mounting and adjusting the tensioning device.

According to one embodiment, the idea is that the skid plate comprises several screw holes at the vertical fastening screws between the axle tubes and the frame of the work machine in such a way that the said vertical fastening screws are accessible through the said screw holes. The skid plate provides protection from below also to the fastening screws.

According to one embodiment, the idea is that the skid plate is attached to the cross axle only by means of the said one or more tensioning devices. In this case, no separate fastening means are required for attaching the skid plate. Furthermore, removal and attachment can take place rapidly since attachment takes place simultaneously with the tensioning device.

According to one embodiment, the idea is that the upper surface side surface of the skid plate is provided with upwards extending projections, which are fitted to be supported against surfaces below the cross axle and to thus transfer upwards directed forces exerted on the skid plate to the cross axle. The said projections may at the same time also act as attachment means for the tensioning devices.

According to one embodiment, the idea is that the lower surface of the skid plate is even, without any projections, whereupon it is arranged to act as a sliding surface below the cross axle.

According to one embodiment, the idea is that the tensioning device comprises coupling means which are fixed at least to the vertical fastening screws between the axle tubes and the frame of the work machine.

According to one embodiment, the idea is that, in addition to the said vertical fastening screws, the coupling means of the tensioning device are also fixed to the horizontal fastening screws, with which the axle tubes are fixed to the frame of the work machine in the transverse direction of the cross axle.

According to one embodiment, the idea is that the arrangement comprises an adapter, by means of which the coupling means of the tensioning device can be attached simultaneously to both the vertical fastening screws and the horizontal fastening screws. In this case, the tensioning forces can be exerted on several fastening screws, and even in different directions, whereupon strong tensioning forces can be used. The adapter balances the loads between the fastening screws. The adapter may be a simple piece made by moulding or as sheet work, with attachment openings for vertical and horizontal fastening screws and means for fastening to the coupling loop of the tensioning device. An alternative use for the adapter is that the coupling means of the tensioning device is designed so as to be attachable to both vertical and horizontal fastening screws.

According to one embodiment, the idea is that the coupling means of the tensioning device are only connected to horizontal fastening screws.

According to one embodiment, the idea is that the skid plate is a rectangular piece with two opposite short sides and two opposite long sides. The tensioning devices are fitted parallel to the long sides and at a transverse distance from one another.

According to one embodiment, the idea is that the tensioning devices are attached to the upper surface of the skid plate by means of an articulated mechanism in such a way that the position of the coupling loops with respect to the body of the tensioning device can be turned. The articulated mechanism facilitates the mounting of the tensioning device.

According to one embodiment, the idea is that the skid plate is attached to the cross axle structure by means of the tensioning device coupling loops, whereupon no separate attachment means are required in the sheet-like main part of the skid plate. The coupling loops can thus be used simultaneously for two different purposes and the basic structure of the skid plate can be extremely simple, which means that it can also be durable and easy to manufacture.

According to one embodiment, the idea is that the skid plate is attached with separate vertical fastening screws to the structure of the cross axle or to the frame structure of the work machine at the front and back of the cross axle. In this case, the skid plate attachment may be based on both the attachment of the tensioning means and on separate fastening screws, or alternatively the attachment may be provided merely by means of separate vertical fastening screws. The sheet-like structure of the skid plate may have attachment openings for vertical fastening screws. The locations and dimensions of the attachment openings may be designed case-by-case.

According to one embodiment, the idea is that the work machine is a forestry machine such as a harvester or a forwarder.

According to one embodiment, the idea is that the work machine is an earthmover, such as a dumper or a mining truck, or a loader.

According to one embodiment, the idea is that the work machine is a vehicle intended for off-road use, such as a military vehicle.

According to one embodiment, the idea is that the body of the cross axle is modular, comprising the said centre body and two hollow axle tubes removably attached on its opposite sides.

According to one embodiment, the idea is that the set of axles is a driving structure, in which case there is a differential inside the centre body and transmission shafts run through the axle tubes and transmit the rotational movement transmitted to the differential to the swing bogies and further through the swing bogies to the work machine wheels. The centre body may also be called the differential part. Furthermore, a known colloquial expression for the centre body is a banjo and for the axle tube a banjo tube, respectively.

According to one embodiment, the idea is that inside each of the axle tubes comprised in the set of axles is fitted a braking device.

According to one embodiment, the idea is that between the axle tube and the centre body is a flange joint, wherein the axle tube flange is tensioned by means of axial screws against the attachment surface in the centre body.

According to one embodiment, the idea is a method for attaching the body parts of the modular cross axle of the work machine to each other and to the frame of the work machine. According to the method, the axle tubes are attached on either side of the centre body of the cross axle by screw fastening. The assembled cross axle is attached to the work machine frame at the axle tubes with vertical fastening screws and horizontal fastening screws. In addition, on the lower surface side of the cross axle is fitted one or more external tensioning devices, which are attached to the fastening screws between the cross axle and the work machine frame at the axle tubes. The axle tubes of the cross axle are pulled towards each other by means of the tensioning device. The tensioning device is capable of receiving the forces which tend to spread the axle tubes away from each other. When the tensioning device receives a portion of the loads exerted on the cross axle, the durability of the body parts of the modular cross axle improves.

According to one embodiment, the idea is that there are one or more articulated loop means or the like in connection with the coupling means of the tensioning device.

According to one embodiment, the idea is that the arm of the coupling means is bent into an angular position with respect to its body.

According to one embodiment, the idea is that a broken axle tube is repair-welded and by means of one or more tensioning device is ensured that the repaired axle tube withstands the strains exerted on it equally well or better than the original axle tube.

### BRIEF DESCRIPTION OF THE FIGURES

Some embodiments of the disclosed solution are described in greater detail in the following Figures, wherein
Figure 1 shows diagrammatically a forestry machine, the chassis of which is provided with sets of axles with swing bogies of the disclosed type,
Figure 2 shows diagrammatically, and as seen from the driving direction, a set of axles and the lower side support of the modular body of its cross axle by means of a tensioning device,
Figure 3 shows diagrammatically, and as seen from below, an arrangement for attaching the tensioning devices to the vertical fastening screws of the axle tube,
Figure 4 shows diagrammatically, and as seen from below, an arrangement for attaching the tensioning devices to the horizontal fastening screws of the axle tube,
Figure 5 shows diagrammatically, and as seen from below, an arrangement for attaching the tensioning devices to the vertical and horizontal fastening screws of the axle tube by means of adapters,
Figures 6 and 7 show, in the longitudinal direction of the cross axle and in a highly simplified manner, the location of the tensioning devices on either side of the central axis of the cross axle and the support of the skid plate on the cross axle,
Figure 8 shows diagrammatically, and as seen from the side, a skid plate provided with a tensioning device,
Figure 9 shows diagrammatically, and as seen from above, a skid plate with two parallel tensioning devices, and
Figure 10 shows diagrammatically an alternative skid plate as seen from above.

For the sake of clarity, some of the embodiments of the disclosed solutions are shown in simplified form in the Figures. The Figures use the same reference numerals for referring to the same elements and features.

### DETAILED DESCRIPTION OF SOME EMBODIMENTS

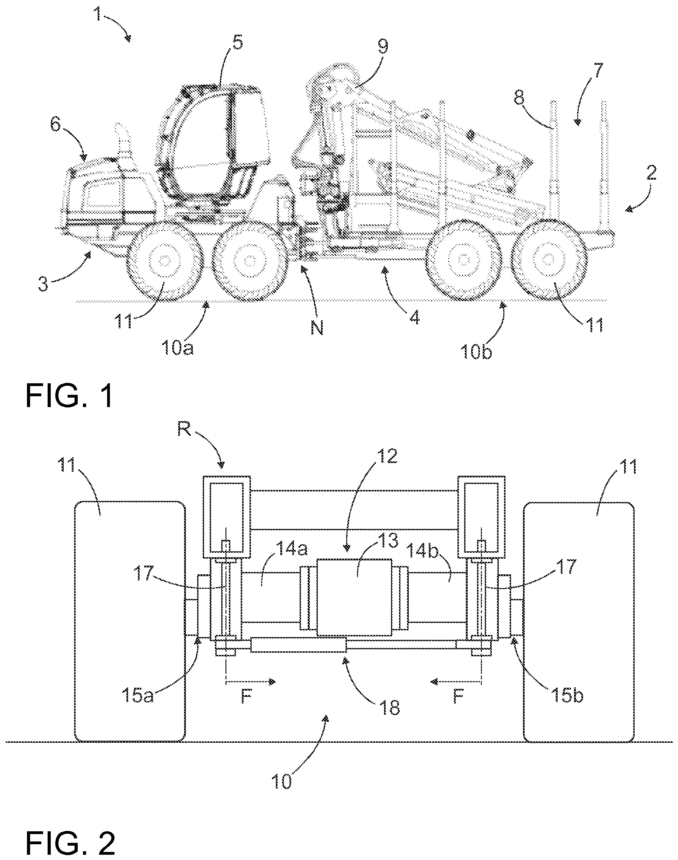

Figure 1 shows a work machine 1, in this case a forwarder, which is a forestry machine intended for forestry use. The work machine 1 comprises a chassis 2 which may comprise a front frame 3 and a rear frame 4 and between them an articulation N for articulated steering. In addition to the cab 5, on the front frame 3 is fitted a power unit 6 with auxiliary equipment. On the rear frame 4 is in turn arranged a load space 7 with bunks 8 and a crane 9 intended for handling timber. In the work machine 1 shown in the Figure, both the front frame 3 and the rear frame 4 are equipped with a set of axles 10a and 10b of the type disclosed in this application. Alternatively, a forest harvester may have one set of swing bogie axles and one set of axles without twin wheels.

Around the wheels 11 of the set of swing bogie axles 10a, 10b may be fitted tracks to increase the carrying capacity of the driving machine. Increasing the width of the wheels 11 supported by the sets of axles and of the tracks increases the loads exerted on the set of axles, as does increasing the load space and the mass being transported. By means of the solution disclosed in this application, breakages of the cross axle comprised in the set of axles can be prevented.

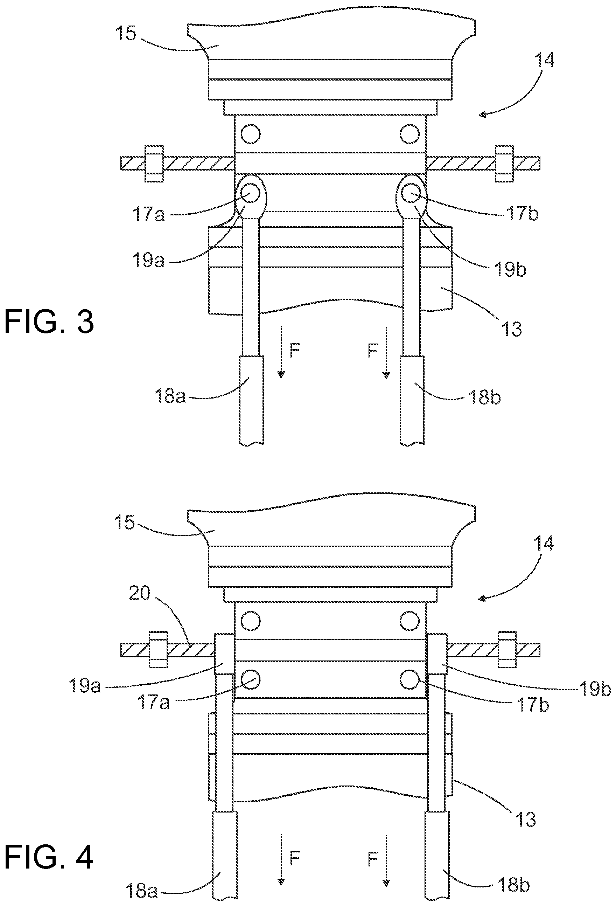

Figure 2 shows the structure of the set of axles 10 in simplified form. The set of axles 10 comprises a cross axle 12, which is modular and comprises a centre body 13 and two axle tubes 14a, 14b attached to the centre body 13. At the ends of the cross axle 12, on both sides of the work machine frame R, are swing bogies 15a, 15b, on which the wheels 11 are supported. The set of axles 10 is attached to the work machine frame R by tensioning the attachment surfaces on the upper surfaces of the axle tubes 14a, 14b with vertical fastening screws 17 against the attachment surfaces on the frame R. The set of axles 10 is further supported by fastening screws which are horizontal in the driving direction and which are shown below in Figures 3 to 5. As appears from Figure 2, on the lower surface side of the cross axle 12 are one or more tensioning devices 18, by means of which can be generated support forces F for pulling the axle tubes 14a, 14b towards each other.

Figure 3 shows an axle tube 14 and the attachment of the coupling means 19a, 19b comprised in the tensioning devices 18a, 18b to the vertical fastening screws 17a, 17b.

Figure 4 shows that the coupling means 19a, 19b of the tensioning devices 18a, 18b are attached to the horizontal fastening screws 20.

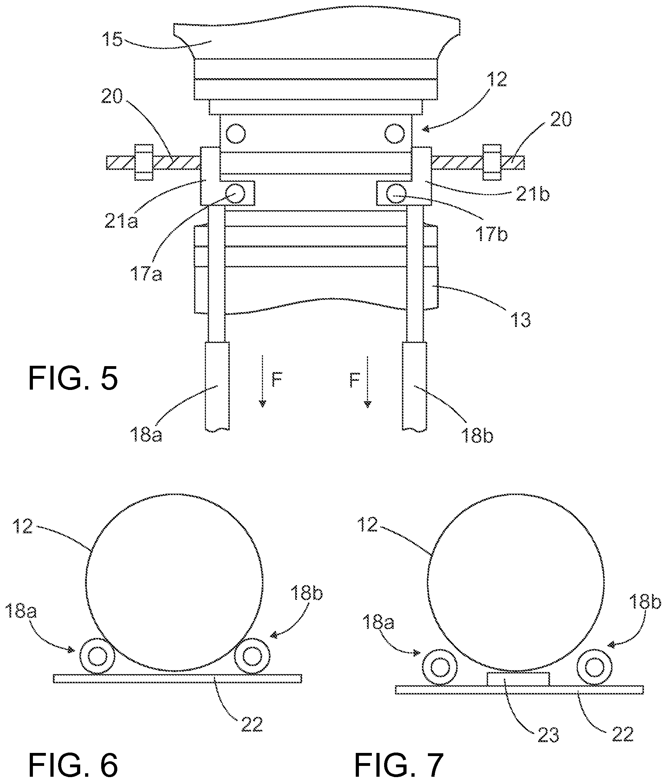

Figure 5, on the other hand, shows that the tensioning devices 18a, 18b are attached by means of adapters 21a, 21b to both vertical fastening screws 17a, 17b and horizontal fastening screws 20.

Figures 6 and 7 show that the tensioning devices 18a, 18b may be attached on the upper surface side of the skid plate 22, whereupon they are protected from impacts from below. It can, furthermore, be seen that the tensioning devices 18a, 18b are located on opposite sides of the central axis of the cross axle 12. In Figure 6, the upper surface of the skid plate 22 is supported against the lower surface of the cross axle 12. In Figure 7, the upper surface of the skid plate 22 is provided with an upwards rising projection 23 which is supported against the lower surface of the cross axle 12.

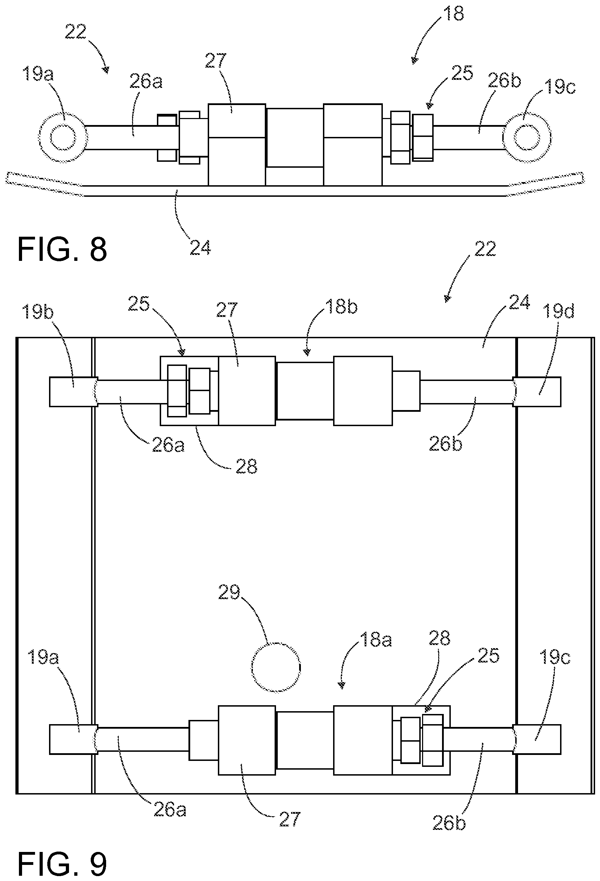

Figure 8 shows a skid plate 22, on the upper surface of the sheet-like main part 24 of which is attached a tensioning device 18. The tensioning device 18 comprises screw means 25, by means of which the distance between the coupling means 19a, 19c can be adjusted. The arms 26a, 26b of the tensioning device 18 may comprise threading. The tensioning device 18 may be attached to the main part 24 by projections 27.

Figure 9 shows a skid plate 22, the main part 24 of which is a rectangular sheet section, parallel with the long sides of which are fitted two tensioning devices 18a, 18b. In other respects, the structure corresponds to that shown in Figure 8. Figure 9 further shows that the skid plate 22 may comprise access openings 28 at the screw means 25 so that on them can be exerted an effect from below the set of axles. The sheet section of the skid plate may also comprise an opening 29 for an oil change plug and possibly several screw holes, through which can be fitted possible fastening screws for attaching the skid plate to the work machine frame.

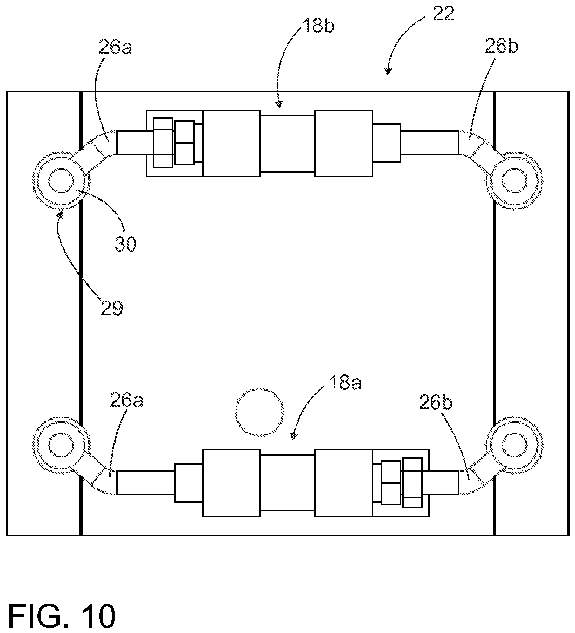

The skid plate 22 shown in Figure 10 corresponds to the skid plate shown in Figure 9 except in that the arms 26a, 26b of the tensioning devices 18a, 18b are bent. The bent arms may facilitate the mounting of the skid plate. It should also be noted that in connection with the coupling means may be an articulated coupling part or a coupling loop 30 with a hole for a fastening screw. The articulated coupling part allows position deviations between the coupling means and the fastening screw and thus facilitates both mounting and removal. The coupling loop 30 or coupling means 19 may also be non-articulated or there may be more than one articulation.

The Figures and their descriptions only serve to illustrate the idea of the invention. The scope of protection of the invention is, however, defined in the claims of the application.

## Claims

1. A skid plate (22), which is a sheet-like metal section with an upper surface and a lower surface, and which comprises attachment means for attaching the skid plate (22) under the cross axle (12) of the work machine (1), and support means for supporting the upper surface of the skid plate (22) against the lower surface of the cross axle (12);
**characterised in that**
the skid plate (22) comprises two tensioning devices (18a, 18b) on its upper surface side, each with an elongated body and coupling loops (19, 30) at both ends of the body; and
both tensioning devices (18a, 18b) comprise a screw mechanism (25) for changing the distance between the said coupling loops (19, 30).

2. The skid plate as claimed in claim 1, **characterised in that**
the attachment means for attaching the skid plate (22) are the coupling loops (19, 30) of the tensioning devices, whereupon the sheet-like section (24) of the skid plate (22) is without attachment means for attaching to the cross axle (12).

3. An arrangement comprising a set of axles (10) of a work machine (1),
the set of axles (10) comprising a cross axle (12) transverse to the frame (R) of the work machine (1) and swing bogies (15) with wheels (11) fixed to both ends of the cross axle (12);
and the body of the cross axle (12) comprising a centre body (13) and two axle tubes (14a, 14b) removably attached on its opposite sides;
and the set of axles (10) being attached to the frame (R) of the work machine (1) by means of attachment surfaces between the upper surface of the axle tubes (14a, 14b) and the lower surface of the frame (R) and vertical fastening screws (17);
and wherein the centre body (13) and the axle tubes (14a, 14b) comprised in the cross axle (12) are attached to each other by screw joints;
between the axle tubes (14a, 14b) is fitted at least one tensioning device (18) which is arranged to pull the axle tubes (14a, 14b) towards each other and the centre body (13);
**characterised in that**
on the lower surface side of the cross axle (12) is a skid plate (22) which is a sheet-like piece and is in accordance with claims 1 or 2; and
the said at least one tensioning device (18) is fitted between the upper surface of the skid plate (22) and the lower surface of the cross axle (12).

4. The arrangement as claimed in claim 3, **characterised in that**
with respect to the structure of the cross axle (12), the said tensioning device (18) is an external and separate component which can be fixed in place and removed without disassembling the cross axle (12) structure.

5. The arrangement as claimed in claim 3 or 4, **characterised in that**
the said tensioning device (18) is fitted on the lower surface side of the cross axle (12), that is, on the opposite side with respect to the said attachment surfaces.

6. The arrangement as claimed in any of the previous claims 3 - 5, **characterised in that**
the arrangement comprises two tensioning devices (18a, 18b) fitted on either side of the central axis of the cross axle (12).

7. The arrangement as claimed in any of the previous claims 3 - 6, **characterised in that**
the tensioning device (18) is an elongated piece, both ends of which comprise coupling means (19) for coupling with the fastening screws (17, 20) between the axle tubes (14a, 14b) and the work machine (1) frame (R), and means for moving the coupling means (19) towards each other and away from each other in the longitudinal direction of the tensioning device (18).

8. The arrangement as claimed in any of the previous claims 3 - 7, **characterised in that**
the tensioning device (18) comprises an elongated body, both ends of which are provided with coupling loops (30), and which body comprises a screw mechanism (25) for changing the distance between the coupling loops (30).

9. The arrangement as claimed in any of the previous claims 3 - 8, **characterised in that**
the tensioning device (18) comprises coupling means (19) which are fixed at least to the vertical fastening screws (17) between the axle tubes (14a, 14b) and the frame (R) of the work machine (1).

10. A method for attaching the body parts of a modular cross axle (12) of a work machine (1) to each other and to the frame (R) of the work machine (1),
the method comprising:
fixing the axle tubes (14a, 14b) comprised in the cross axle (12) body on either side of the centre body (13) by screw fastening; and
attaching the cross axle (12) to the frame (R) of the work machine (1) at the axle tubes (14a, 14b) with vertical fastening screws (17) and horizontal fastening screws (20);
fitting on the lower surface side of the cross axle (12) at least one external tensioning device (18);
attaching the tensioning device (18) to the fastening screws (17, 20) between the cross axle (12) and the work machine (1) frame (R) at the axle tubes (14a, 14b) of the cross axle (12); and
pulling the axle tubes (14a, 14b) of the cross axle (12) towards each other by means of the said at least one tensioning device (18), whereupon the tensioning device (18) is adapted to receive a portion of the loads exerted on the cross axle (12);
**characterised by**
fitting on the lower surface side of the cross axle (12) a skid plate (22) according to claim 1 or 2 provided with two tensioning devices (18a, 18b) on the upper surface side of the skid plate (22).

11. The method as claimed in claim 10, **characterised by**
providing the tensioning device (18) with coupling loops (19, 30) and attaching the coupling loops (19, 30) to the vertical fastening screws (17) between the axle tubes (12) and the work machine (1) frame (R).

12. The method as claimed in claim 10 or 11, **characterised by**
providing the tensioning device (18) with coupling loops (19, 30) and attaching the coupling loops (19, 30) to the vertical fastening screws (17) and horizontal fastening screws (20) between the axle tubes (14a, 14b) and the work machine (1) frame (R) by means of and adapter (21).

13. The method as claimed in any of the previous claims 10 - 12, **characterised by**
pulling the axle tubes (14a, 14b) towards each other by means of a screw mechanism (25) comprised in the tensioning device (18); and
exerting an effect on the said screw mechanism (25) from below the cross axle (12).

## Patentansprüche

1. Gleitplatte (22), die ein blechartiger Metallabschnitt mit einer oberen Oberfläche und einer unteren Oberfläche ist, und die Befestigungsmittel zum Anbringen der Gleitplatte (22) unter der Querachse (12) der Arbeitsmaschine (1) und Stützmittel zum Stützen der oberen Oberfläche der Gleitplatte (22) gegen die untere Oberfläche der Querachse (12) umfasst;
**dadurch gekennzeichnet, dass**
die Gleitplatte (22) zwei Spannvorrichtungen (18a, 18b) auf ihrer oberen Oberflächenseite umfasst, die jeweils einen länglichen Körper und Kopplungsschlaufen (19, 30) an beiden Enden des Körpers aufweisen; und
beide Spannvorrichtungen (18a, 18b) einen Schraubmechanismus (25) zum Verändern des Abstands zwischen den Kopplungsschlaufen (19, 30) umfassen.

2. Gleitplatte nach Anspruch 1,
**dadurch gekennzeichnet, dass**
die Befestigungsmittel zum Anbringen der Gleitplatte (22) die Kopplungsschlaufen (19, 30) der Spannvorrichtungen sind, woraufhin der blechartige Abschnitt (24) der Gleitplatte (22) ohne Befestigungsmittel zum Anbringen an der Querachse (12) ist.

3. Anordnung, die einen Achsensatz (10) einer Arbeitsmaschine (1) umfasst,
wobei der Achsensatz (10) eine Querachse (12) transversal zu dem Rahmen (R) der Arbeitsmaschine (1) und Pendel-Bogies (15) mit Rädern (11) umfasst, die an beiden Enden der Querachse (12) fixiert sind;
und der Körper der Querachse (12) einen Zentralkörper (13) und zwei Achsrohre (14a, 14b) umfasst, die auf seinen gegenüberliegenden Seiten entfernbar angebracht sind;
und der Achsensatz (10) an dem Rahmen (R) der Arbeitsmaschine (1) mittels Befestigungsoberflächen zwischen der oberen Oberfläche der Achsrohre (14a, 14b) und der unteren Oberfläche des Rahmens (R) und vertikalen Befestigungsschrauben (17) angebracht ist;
und wobei der Zentralkörper (13) und die Achsrohre (14a, 14b), die die Querachse (12) umfasst, durch Schraubverbindungen aneinander angebracht sind;
zwischen den Achsrohren (14a, 14b) mindestens eine Spannvorrichtung (18) montiert ist, die dazu eingerichtet ist, die Achsrohre (14a, 14b) zueinander und zum Zentralkörper (13) zu ziehen;
**dadurch gekennzeichnet, dass**
auf der unteren Oberflächenseite der Querachse (12) eine Gleitplatte (22) ist, die ein blechartiges Stück ist und gemäß den Ansprüchen 1 oder 2 ist; und
die mindestens eine Spannvorrichtung (18) zwischen der oberen Oberfläche der Gleitplatte (22) und der unteren Oberfläche der Querachse (12) montiert ist.

4. Anordnung nach Anspruch 3, **dadurch gekennzeichnet, dass**
in Bezug auf die Struktur der Querachse (12) die Spannvorrichtung (18) ein externes und getrenntes Bauteil ist, das an einer Stelle fixiert und entfernt werden kann, ohne die Struktur der Querachse (12) auseinanderzubauen.

5. Anordnung nach Anspruch 3 oder 4, **dadurch gekennzeichnet, dass**
die Spannvorrichtung (18) auf der unteren Oberflächenseite der Querachse (12) montiert ist, d.h. auf der gegenüberliegenden Seite in Bezug auf die Befestigungsoberflächen.

6. Anordnung nach einem der vorherigen Ansprüche 3 - 5, **dadurch gekennzeichnet, dass**
die Anordnung zwei Spannvorrichtungen (18a, 18b) umfasst, die auf beiden Seiten der Zentralachse der Querachse (12) montiert sind.

7. Anordnung nach einem der vorherigen Ansprüche 3 - 6, **dadurch gekennzeichnet, dass**
die Spannvorrichtung (18) ein längliches Stück ist, dessen beide Enden Kopplungsmittel (19) zum Koppeln mit den Befestigungsschrauben (17, 20) zwischen den Achsrohren (14a, 14b) und dem Rahmen (R) der Arbeitsmaschine (1) umfassen, und Mittel zum Bewegen der Kopplungsmittel (19) zueinander und voneinander weg in der Längsrichtung der Spannvorrichtung (18).

8. Anordnung nach einem der vorherigen Ansprüche 3 - 7, **dadurch gekennzeichnet, dass**
die Spannvorrichtung (18) einen länglichen Körper umfasst, dessen beide Enden mit Kopplungsschlaufen (30) bereitgestellt sind, und welcher Körper einen Schraubmechanismus (25) zum Verändern des Abstands zwischen den Kopplungsschlaufen (30) umfasst.

9. Anordnung nach einem der vorherigen Ansprüche 3 - 8, **dadurch gekennzeichnet, dass**
die Spannvorrichtung (18) Kopplungsmittel (19) umfasst, die zumindest an den vertikalen Befestigungsschrauben (17) zwischen den Achsrohren (14a, 14b) und dem Rahmen (R) der Arbeitsmaschine (1) fixiert sind.

10. Verfahren zum Anbringen der Körperteile einer modularen Querachse (12) einer Arbeitsmaschine (1) aneinander und an dem Rahmen (R) der Arbeitsmaschine (1),
wobei das Verfahren Folgendes umfasst:
Fixieren der Achsrohre (14a, 14b), die der Körper der Querachse (12) umfasst, auf beiden Seiten des Zentralkörpers (13) durch Verschraubung; und
Anbringen der Querachse (12) an dem Rahmen (R) der Arbeitsmaschine (1) an den Achsrohren (14a, 14b) mit vertikalen Befestigungsschrauben (17) und horizontalen Befestigungsschrauben (20);
Montieren, auf der unteren Oberflächenseite der Querachse (12), mindestens einer externen Spannvorrichtung (18);
Anbringen der Spannvorrichtung (18) an den Befestigungsschrauben (17, 20) zwischen der Querachse (12) und dem Rahmen (R) der Arbeitsmaschine (1) an den Achsrohren (14a, 14b) der Querachse (12); und
Ziehen der Achsrohre (14a, 14b) der Querachse (12) zueinander mittels der mindestens einen Spannvorrichtung (18), woraufhin die Spannvorrichtung (18) dazu ausgelegt ist, einen Anteil der auf die Querachse (12) ausgeübten Lasten zu aufzunehmen;
**gekennzeichnet durch**
Montieren, auf der unteren Oberflächenseite der Querachse (12), einer Gleitplatte (22) gemäß Anspruch 1 oder 2, die mit zwei Spannvorrichtungen (18a, 18b) auf der oberen Oberflächenseite der Gleitplatte (22) bereitgestellt ist.

11. Verfahren nach Anspruch 10, **gekennzeichnet durch**
Bereitstellen der Spannvorrichtung (18) mit Kopplungsschlaufen (19, 30) und Anbringen der Kopplungsschlaufen (19, 30) an den vertikalen Befestigungsschrauben (17) zwischen den Achsrohren (12) und dem Rahmen (R) der Arbeitsmaschine (1).

12. Verfahren nach Anspruch 10 oder 11, **gekennzeichnet durch**
Bereitstellen der Spannvorrichtung (18) mit Kopplungsschlaufen (19, 30) und Anbringen der Kopplungsschlaufen (19, 30) an den vertikalen Befestigungsschrauben (17) und horizontalen Befestigungsschrauben (20) zwischen den Achsrohren (14a, 14b) und dem Rahmen (R) der Arbeitsmaschine (1) mittels eines Adapters (21).

13. Verfahren nach einem der vorherigen Ansprüche 10 - 12, **gekennzeichnet durch**
Ziehen der Achsrohre (14a, 14b) zueinander mittels eines Schraubmechanismus (25), den die Spannvorrichtung (18) umfasst; und
Ausüben eines Effekts auf den Schraubmechanismus (25) von unterhalb der Querachse (12).

## Revendications

1. Plaque de patin (22), qui est une section métallique en forme de feuille avec une surface supérieure et une surface inférieure, et qui comprend des moyens de fixation pour fixer la plaque de patin (22) sous l'essieu transversal (12) de la machine de travail (1), et des moyens de support pour supporter la surface supérieure de la plaque de patin (22) contre la surface inférieure de l'essieu transversal (12) ;
**caractérisée en ce que**
la plaque de patin (22) comprend deux dispositifs de mise en tension (18a, 18b) sur son côté de surface supérieure, chacun avec un corps allongé et des boucles de couplage (19, 30) aux deux extrémités du corps ; et
les deux dispositifs de mise en tension (18a, 18b) comprennent un mécanisme à vis (25) pour modifier la distance entre lesdites boucles de couplage (19, 30).

2. Plaque de patin selon la revendication 1, **caractérisée en ce que**
les moyens de fixation pour fixer la plaque de patin (22) sont les boucles de couplage (19, 30) des dispositifs de mise en tension, après quoi la section en forme de feuille (24) de la plaque de patin (22) est dépourvue de moyens de fixation pour une fixation à l'essieu transversal (12).

3. Agencement comprenant un ensemble d'essieux (10) d'une machine de travail (1),
l'ensemble d'essieux (10) comprenant un essieu transversal (12) qui est transversal par rapport au cadre (R) de la machine de travail (1) et des bogies oscillants (15) avec des roues (11) fixées aux deux extrémités de l'essieu transversal (12) ;
et le corps de l'essieu transversal (12) comprenant un corps central (13) et deux tubes d'essieu (14a, 14b) fixés de manière amovible sur ses côtés opposés ;
et l'ensemble d'essieux (10) étant fixé au cadre (R) de la machine de travail (1) au moyen de surfaces de fixation entre la surface supérieure des tubes d'essieu (14a, 14b) et la surface inférieure du cadre (R), et de vis de fixation verticales (17) ;
et dans lequel le corps central (13) et les tubes d'essieu (14a, 14b) compris dans l'essieu transversal (12) sont fixés mutuellement par des joints à vis ;
entre les tubes d'essieu (14a, 14b) est installé au moins un dispositif de mise en tension (18) qui est agencé pour tirer les tubes d'essieu (14a, 14b) l'un vers l'autre et le corps central (13) ;
**caractérisé en ce que**
sur le côté de surface inférieure de l'essieu transversal (12) se trouve une plaque de patin (22) qui est une pièce en forme de feuille et qui est conforme aux revendications 1 ou 2 ; et
ledit au moins un dispositif de mise en tension (18) est monté entre la surface supérieure de la plaque de patin (22) et la surface inférieure de l'essieu transversal (12).

4. Dispositif selon la revendication 3, **caractérisé en ce que**
par rapport à la structure de l'essieu transversal (12), ledit dispositif de mise en tension (18) est un composant externe et séparé qui peut être fixé en place et retiré sans démonter la structure de l'essieu transversal (12).

5. Dispositif selon la revendication 3 ou 4, **caractérisé en ce que**
ledit dispositif de mise en tension (18) est monté sur le côté de la surface inférieure de l'essieu transversal (12), c'est-à-dire sur le côté opposé par rapport auxdites surfaces de fixation.

6. Agencement selon l'une quelconque des revendications précédentes 3 à 5, **caractérisé en ce que**
l'agencement comprend deux dispositifs de mise en tension (18a, 18b) montés de part et d'autre de l'axe central de l'essieu transversal (12).

7. Agencement selon l'une quelconque des revendications précédentes 3 à 6, **caractérisé en ce que**
le dispositif de mise en tension (18) est une pièce allongée, dont les deux extrémités comprennent des moyens de couplage (19) pour un couplage avec les vis de fixation (17, 20) entre les tubes d'essieu (14a, 14b) et le cadre (R) de la machine de travail (1), et des moyens pour déplacer les moyens de couplage (19) les uns vers les autres et à l'écart les uns des autres dans la direction longitudinale du dispositif de mise en tension (18).

8. Agencement selon l'une quelconque des revendications précédentes 3 à 7, **caractérisé en ce que**
le dispositif de mise en tension (18) comprend un corps allongé, dont les deux extrémités sont pourvues de boucles de couplage (30), et lequel corps comprend un mécanisme à vis (25) pour modifier la distance entre les boucles de couplage (30).

9. Agencement selon l'une quelconque des revendications précédentes 3 à 8, **caractérisé en ce que**
le dispositif de mise en tension (18) comprend des moyens de couplage (19) qui sont fixés au moins aux vis de fixation verticales (17) entre les tubes d'essieu (14a, 14b) et le cadre (R) de la machine de travail (1).

10. Procédé pour fixer les parties de corps d'un essieu transversal modulaire (12) d'une machine de travail (1) les unes aux autres et au cadre (R) de la machine de travail (1),
le procédé comprenant les étapes consistant à :
fixer les tubes d'essieu (14a, 14b) compris dans le corps d'essieu transversal (12) de chaque côté du corps central (13) par une fixation à vis ; et
fixer l'essieu transversal (12) au cadre (R) de la machine de travail (1) au niveau des tubes d'essieu (14a, 14b) avec des vis de fixation verticales (17) et des vis de fixation horizontales (20) ;
monter sur le côté de surface inférieure de l'essieu transversal (12) au moins un dispositif de mise en tension externe (18) ;
fixer le dispositif de mise en tension (18) aux vis de fixation (17, 20) entre l'essieu transversal (12) et le cadre (R) de la machine de travail (1) au niveau des tubes d'essieu (14a, 14b) de l'essieu transversal (12) ; et
tirer les tubes d'essieu (14a, 14b) de l'essieu transversal (12) l'un vers l'autre au moyen dudit au moins un dispositif de mise en tension (18), après quoi le dispositif de mise en tension (18) est adapté pour recevoir une partie des charges exercées sur l'essieu transversal (12) ;
**caractérisé par**
le montage sur le côté de surface inférieure de l'essieu transversal (12) d'une plaque de patin (22) selon la revendication 1 ou 2, pourvue de deux dispositifs de mise en tension (18a, 18b) sur le côté de surface supérieure de la plaque de patin (22).

11. Procédé selon la revendication 10,
**caractérisé par** l'étape consistant à
doter le dispositif de mise en tension (18) de boucles de couplage (19, 30) et fixer les boucles de couplage (19, 30) aux vis de fixation verticales (17) entre les tubes d'essieu (12) et le cadre (R) de la machine de travail (1).

12. Procédé selon la revendication 10 ou 11,
**caractérisé par** l'étape consistant à
doter le dispositif de mise en tension (18) de boucles de couplage (19, 30) et fixer les boucles de couplage (19, 30) aux vis de fixation verticales (17) et aux vis de fixation horizontales (20) entre les tubes d'essieu (14a, 14b) et le cadre (R) de la machine de travail (1) au moyen d'un adaptateur (21).

13. Procédé selon l'une quelconque des revendications précédentes 10 à 12, **caractérisé par** les étapes consistant à
tirer les tubes d'essieu (14a, 14b) l'un vers l'autre au moyen d'un mécanisme à vis (25) compris dans le dispositif de mise en tension (18) ; et
exercer un effet sur ledit mécanisme à vis (25) depuis le dessous de l'essieu transversal (12).
